# EUROPÄISCHE PATENTSCHRIFT

(11) **EP 2 227 326 B1**
(45) Veröffentlichungstag und Bekanntmachung des Hinweises auf die Patenterteilung: **11.01.2017**
(21) Anmeldenummer: 08854283.2
(22) Anmeldetag: 27.11.2008
(51) Int. Cl.: B01J 23/40, B01J 29/072, B01J 29/72, B01D 53/94, B01J 37/02

(54) **BESCHICHTUNGSZUSAMMENSETZUNG FÜR DIESELOXIDATIONSKATALYSATOREN**
COATING COMPOSTIION FOR DIESEL OXIDATION CATALYSTS
COMPOSITION DE REVÊTEMENT POUR CATALYSEURS D'OXYDATION DIESEL

(30) Priorität: 28.11.2007 DE 102007057305
(43) Veröffentlichungstag der Anmeldung: 15.09.2010
(73) Patentinhaber: Süd-Chemie IP GmbH & Co. KG, 80333 München (DE)
(72) Erfinder: MALETZ, Gerd, 83043 Bad Aibling (DE); KURTH, Volker, 53225 Bonn (DE); BENTELE, Andreas, 83043 Bad Aibling (DE); WANNINGER, Klaus, 83059 Kolbermoor (DE); TISSLER, Arno, 93105 Tegernheim (DE)
(74) Vertreter: Stolmár & Partner Patentanwälte PartG mbB
(86) Internationale Anmeldenummer: PCT/EP2008/010086
(87) Internationale Veröffentlichungsnummer: WO 2009/068289

(56) Entgegenhaltungen:
- EP-A- 1 721 665
- EP-A- 1 810 750
- EP-A- 1 992 409
- EP-A1- 1 475 141
- EP-A2- 0 559 021
- EP-A2- 1 779 927
- WO-A-2008/106523
- WO-A1-2005/099873
- BALLE P ET AL: "A novel laboratory bench for practical evaluation of catalysts useful for simultaneous conversion of NOx and soot in diesel exhaust" CHEMICAL ENGINEERING AND PROCESSING, ELSEVIER SEQUOIA, LAUSANNE, CH, Bd. 45, Nr. 12, 1. Dezember 2006 (2006-12-01), Seiten 1065-1073, XP024995212 ISSN: 0255-2701 [gefunden am 2006-12-01]

## Beschreibung

Die Erfindung betrifft eine Beschichtungszusammensetzung zur Verwendung in Dieseloxidationskatalysatoren, insbesondere in einer Kombination aus einem Dieseloxidationskatalysator und einem Dieselpartikelfilter, sowie ein Verfahren zur Abgasbehandlung von Dieselverbrennungsmotoren.

Zu Beginn der Abgasbehandlung von Verbrennungsmotoren wurden lediglich die Abgase von Benzin- bzw. Ottomotoren mit Dreiwegekatalysatoren (TWC) gereinigt. Dabei werden die im Abgas vorhandenen Stickoxide (NOx) mit den ebenfalls im Abgas enthaltenen Kohlenwasserstoffen (HC) und Kohlenmonoxid (CO) reduziert. Um eine optimale Katalysatorwirkung zu erzielen wird der Benzinmotor bei in etwa stöchiometrischen Bedingungen, d.h. λ = 1, betrieben. Dieser Zustand von λ = 1 im Abgasstrom kann nicht immer exakt eingehalten werden, so dass der Katalysator abwechselnd einer oxidativen und einer reduktiven Gasatmosphäre ausgesetzt ist.

Seit geraumer Zeit versucht man auch die Abgase von Dieselverbrennungsmotoren mit Katalysatoren zu behandeln. Dies erfordert konzeptionelle Änderungen an den Katalysatormaterialien, da ein Dieselmotor im Gegensatz zu einem Benzinmotor immer unter Sauerstoffüberschuss betrieben wird und der Katalysator somit nie reduktiven Bedingungen ausgesetzt ist. Das Abgas von Dieselmotoren weist Kohlenmonoxid, unverbrannte Kohlenwasserstoffe, Stickoxide und Rußpartikel als Luftschadstoffe auf. Die unverbrannten Kohlenwasserstoffe umfassen Paraffine, Olefine, Aldehyde und Aromaten. Im Vergleich zu den Abgasen von Benzinmotoren weisen Dieselabgase einen wesentlich höheren Anteil an schwer oxidierbaren, langkettigen Paraffinen auf. Darüber hinaus sind Dieselabgase wesentlich kälter als Abgase von Benzinmotoren und enthalten Sauerstoff in einer Konzentration zwischen 3 und 10 Vol.-%. Im Teillastbetrieb liegt die Abgastemperatur eines Dieselmotors im Bereich zwischen 100 und 250 °C und erreicht nur im Volllastbetrieb eine Maximaltemperatur zwischen 550 und 650 °C. Dagegen liegt die Abgastemperatur eines Benzinmotors im Teillastbetrieb zwischen 400 und 450 °C und kann bei Volllast bis auf 1000 °C ansteigen.

Bei Katalysatoren für Dieselmotoren spielt folglich die Sauerstoffspeicherfähigkeit des Katalysators im Gegensatz zum TWC eine untergeordnete Rolle. Konsequenterweise können Edelmetallpartikel durch den stetigen Sauerstoffüberschuss nicht zu Metall mit der Oxidationsstufe 0 reduziert werden und auch die Stickoxide lassen sich durch die im Abgas vorhandenen Kohlenwasserstoffe (CO) wegen des Sauerstoffüberschusses im Abgas von Dieselmotoren nicht reduzieren. Ferner können die Kohlenwasserstoffe und das CO sowohl mit Luftsauerstoff als auch mit NOx oxidiert werden.

Ein weiteres Problem bei Dieselmotoren ist wie oben bereits angesprochen, dass die Abgastemperatur im Durchschnitt niedriger ist als bei Benzinmotoren und folglich die katalytische Aktivität des Katalysators im Durchschnitt nicht immer ausreicht, um HC und CO zu oxidieren. Um eine ausreichende katalytische Aktivität zu erreichen muss somit die CO-Light-off Temperatur niedriger sein.

Als Light-off-Temperatur bezeichnet man die Anspringtemperatur des Katalysators, d.h. die Temperatur bei der 50 % Umsatz gemessen werden. Im Falle der HC ist im Gegensatz zu CO die Erniedrigung der Light-off Temperatur schwieriger zu erreichen, da insbesondere gesättigte und aromatische Kohlenwasserstoffe schwerer oxidierbar sind. Um dieses Problem zu umgehen wurden im Stand der Technik versucht, den Katalysatoren Zeolithe zuzusetzen, welche im kalten Betriebszustand die Kohlenwasserstoffe adsorbieren um sie später im heißen Zustand, wo die katalytische Aktivität zur Oxidation der Kohlenwasserstoffe ausreicht, wieder abzugeben.

Ein Beispiel einer HC-Speicherung mit Zeolithen wird in SAE Technical Paper Series, "Advanced Studies on Diesel Aftertreatment Catalysts for Passenger Cars", 1996, beschrieben.

Das EP 0 830 201 B2 offenbart ein Verfahren zur Reduktion von Stickoxiden und insbesondere eine Adsorption von HC an einem nicht-metallierten Zeolithen bei einer Temperatur von bis zu 190 °C und einer Desorption bei Temperaturen von 190-250 °C. Durch dieses Verfahren kann die Reduktion von Stickoxiden verbessert werden.

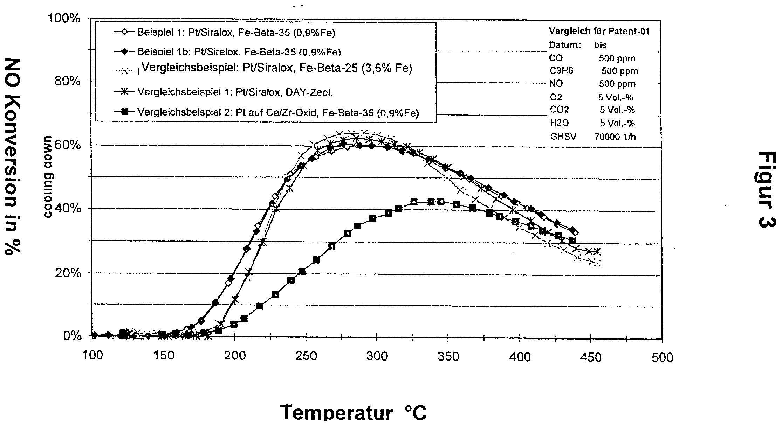

Im TWC werden in der Regel Ceroxid oder Ce/Zr-Mischoxide als Sauerstoffspeichermaterialien eingesetzt. Weitere mögliche Metalloxide sind beispielsweise LaO, ZnO, ZrO₂, SnO₂, YO₂, TiO₂ oder MnO₂. Da Dieselmotoren, wie oben beschrieben, stets mit Sauerstoffüberschuss betrieben werden, ist die Verwendung von Sauerstoffspeichermaterialien bei Dieseloxidationskatalysatoren nicht erforderlich. Ferner zeichnen sich Edelmetalle auf Ceroxid oder cerhaltigen Mischoxiden durch eine hohe Metall-Trägerwechselwirkung aus. Deshalb lassen sich auf Ceroxid oder cerhaltigen Mischoxiden hohe Edelmetalldispersionen, vorzugsweise in hohen Oxidationsstufen, stabilisieren. Das Edelmetall wird im TWC durch den ständigen Wechsel zu reduktiven Bedingungen immer wieder reduziert. Dies ist bei Dieseloxidationskatalysatoren nicht möglich, mit der Folge, dass das Edelmetall im Dieseloxidationskatalysator erst bei höheren Temperaturen ausreichend mit CO reagiert. Es ergibt sich deshalb eine erhöhte Light-off-Temperatur für CO und Propen bei Verwendung von Edelmetallen auf cerhaltigen Oxiden. Dieses Verhalten ist auch in der Veröffentlichung SAE 2005-01-0476 und insbesondere in dessen Figuren 3 bis 6 eindeutig zu erkennen. Bei hoher Temperatur wird die Pt-Dispersion hingegen sehr gut genutzt und erlaubt deshalb niedrigere Edelmetallkonzentrationen auf den Katalysatoren.

Platin auf Zirkonoxid oder Aluminiumoxid oder Al/Si-Mischoxide besitzen eine höhere Platinkonzentration der Oxidationsstufe 0 und dadurch eine niedrigere Light-off-Temperatur für CO und HC. Allerdings ist durch die verhältnismäßig großen Platinteilchen und dadurch geringere Platinoberfläche die Effektivität des Platins verringert. Deshalb wird in dem EP 0 614 398 B1 und dem EP 0 614 399 B1 eine Mischung von "Bulk-Ceria" und "Bulk-Alumina" oder anderen Oxiden vorgeschlagen.

In dem EP 0 691 883 B1 und dem US 6,274,107 wird die Verwendung von eisendotierten Zeolithen in Dieseloxidationskatalysatoren in Kombination mit Ceroxid beschrieben. Diese Kombination besitzt jedoch den oben genannten Nachteil einer höheren Light-off-Temperatur für CO.

Die EP 1810750 A1 offenbart einen Oxidationskatalysator zur Abgasbehandlung insbesondere von Dieselmotoren umfassend einen Träger enthaltend Titan- und Zirkondioxid auf dem ein Edelmetall geträgert ist und einem gegebenenfalls mit einem Uebergangsmetall dotierten Zeolithen. Es wird empfohlen, einen Ceroxidhaltigen Co-Katalysator zuzugeben, um die Oxidationsfähigkeit des Katalysators insbesondere in Bezug auf die sogenannte SOF (solvent soluble fraction) zu verbessern.

Die EP 1779927 A2 offenbart einen Oxidationskatalysator zur Abgasbehandlung insbesondere von Dieselmotoren umfassend einen Träger enthaltend Silizium-/Aluminiumdioxid auf dem ein Edelmetall geträgert ist und einem gegebenenfalls mit einem Uebergangsmetall dotierten Zeolithen, der gegenüber einer Schwefelvergiftung bei Verwendung von hoch schwefelhaltigen Treibstoffen beständig ist.

Ein Weg zur Reduktion der Light-off-Temperatur für CO wird in dem EP 0 706 817 B1 aufgezeigt. Darin wird ein Dieseloxidationskatalysator mit Platin auf einem Al/Si-Mischoxid (mit etwa 5% Si) beschrieben.

Die Weiterentwicklung ist in dem EP 0 800 856 B1 beschrieben, wobei unter Verwendung eines H+ und Na+-Zeolithen bereits Light-off-Temperaturen für CO von etwa 150 °C erreicht werden.

Eine weitere Verbesserung ist in dem EP 1 129 764 B1 offenbart, wobei durch eine Kalzinierung mittels Eindüsung in eine Flamme sehr fein verteilte Pt-Teilchen mit einer mittleren Oxidationsstufe < 2,5 entstehen.

Nach Einführung der Dieseloxidationskatalysatoren, die nur CO und Kohlenwasserstoffe und nur in geringem Umfang in einem engen Temperaturbereich die Stickoxide verringern, stellte sich in den letzen Jahren die Reduktion der Partikelemissionen als bedeutende Aufgabe für die Automobilindustrie heraus. Hierzu werden hinter die DOC noch Dieselpartikelfilter (DPF) geschaltet. Solche Systeme sind beispielsweise in dem EP 1 165 946 B1 und dem EP 0 341 832 B1 beschrieben. Heute wird dabei aus Platzgründen und aufgrund des Temperaturmanagements der Dieselpartikelfilter weiter hinten im Fahrzeug angebracht und ist meist vom DOC getrennt.

Für die nächste Katalysatorgeneration wird derzeit zur Verringerung der Stickoxide eine weitere katalytische Stufe, die selektive katalytische Reduktion (SCR) der Stickoxide mit Harnstoff eingeführt. Daher ist aus Platzgründen und zur Kostensenkung eine Zusammenführung von DOC-Funktion und DPF in Zukunft ein wichtiges Ziel. Dieses Ziel wird in der Veröffentlichung SAE 2006-01-1091 beschrieben und eine mögliche Richtung hierfür wird auch noch in der US 2006/0057046 A1 angedacht.

Will man die zwei katalytischen Funktionen des DOC und des DPF in einem Bauteil kombinieren, muss der DOC wesentlich höhere Temperaturen aushalten. Der Grund dafür ist, dass die Dieselpartikelfilter immer wieder aktiv durch Temperaturerhöhung regeneriert werden müssen. Meist werden beim Betrieb von Fahrzeugen immer wieder Temperaturbereiche durchlaufen, bei denen die Temperatur nicht ausreicht um die Rußpartikel nachzuoxidieren. Sie sammeln sich dann auf dem Partikelfilter, weshalb dieser in regelmäßigen Abständen durch aktiven Rußabbrand regeneriert werden muss. Dabei wird der DPF in ungünstigen Fällen (viele Kaltstartphasen = viel gespeicherter Ruß) sehr heiß. Folglich muss bei einer Kombination von DOC und DPF in einem Bauteil der Katalysator wesentlich höhere Temperaturen aushalten.

Die Aufgabe der vorliegenden Erfindung bestand somit in der Bereitstellung einer Beschichtungszusammensetzung für Dieseloxidationskatalysatoren oder einer Kombination aus Dieseloxidationskatalysatoren und Dieselpartikelfilter, bei der die Light-off-Temperatur für CO und HC verringert ist und die eine erhöhte Temperaturstabilität aufweist.

Diese Aufgabe wird gelöst durch eine cerhaltige-Oxide-freie Beschichtungszusammensetzung für Dieseloxidationskatalysatoren, wobei die Beschichtungszusammensetzung eine Kombination aus einem Edelmetall auf einem Metalloxid und einen mit Eisen dotierten Beta-Zeolith (Fe-beta-Zeolith) umfasst und der Beta-Zeolith einen Eisengehalt von 0,6-2,0 Gew.-%, bezogen auf das Gesamtgewicht des Zeolithen, aufweist, wobei das Edelmetall Platin und das Metalloxid ein Al/Si-Nlischoxid ist.

Ebenfalls zum Umfang der Erfindung gehört ein Verfahren zur Abgasbehandlung von Dieselverbrennungsmotoren, wobei die Abgasbehandlung die Oxidation von CO und HC, die Reduktion von NOx und die Eliminierung oder Verringerung von Partikelemissionen durch Oxidation in einem Dieseloxidationskatalysator oder einem kombinierten Dieseloxidationskatalysator und Dieselpartikelfilter umfasst.

Die erfindungsgemäße Katalysatorbeschichtung vereint die Funktionen Oxidationskatalysator und Dieselpartikelfilter in einem Bauelement. Zusätzlich kann auch noch eine Verringerung der NOₓ-Konzentration im Abgas erreicht werden, da es durch die erfindungsgemäße Katalysatorbeschichtung auch zu einer Verschiebung des NOₓ-Gleichgewichts hin zu NO₂ kommt und dieses NO₂ zur Oxidation der Rußpartikel beiträgt. Die Oxidation der Rußpartikel erfolgt dabei leichter mit dem NO₂ als die Oxidation durch mit im Abgasstrom enthaltenem überschüssigem Sauerstoff, so dass bevorzugt NO₂ reagiert und dabei selbst reduziert wird.

Der verwendete Zeolith weist bevorzugt eine Ringöffnung gebildet aus 8, 10 oder 12 Tetraederatomen auf, mit einem hohen Anteil an Siliciumdioxid. Der verwendete Zeolith sollte ein Si/Al-Molverhältnis von >5:1 bis maximal 300:1 besitzen.

Der Beta-Zeolith weist ein SiO₂/Al₂O₃-Verhältnis von 20:1 bis 150:1 und 0,6 bis 2,0 % Eisengehalt eingesetzt.

Der Zeolith ist wie vorstehend schon ausgeführt erfindungsgemäß mit Eisen dotiert. Eisendotierte Zeolithe weisen eine sehr hohe thermische und hydrothermale Stabilität auf und eignen sich deshalb besonders für den Einsatz in kombinierten DOC und DPF. Die Herstellung der mit Eisen dotierten Zeolithe kann durch übliche Verfahren wie Flüssigphasenaustausch oder Feststoffionenaustausch hergestellt werden. Diese Verfahren sind im Stand der Technik bekannt.

Der Zeolith weist einen Eisengehalt von 0,6-2,0 Gew.-%, bezogen auf das Gewicht des Zeolithen auf, um über einen längeren Zeitraum eine optimale Adsorptionsfähigkeit und optimierte hydrothermale Stabilität zu erzielen. Hervorragende Ergebnisse konnten insbesondere mit einem Eisengehalt von 0,9 Gew.-%, bezogen auf das Gewicht des Zeolithen, erreicht werden.

Bevorzugt wird das Eisen mittels einer Festkörperreaktion zwischen einem Eisensalz wie FeSO₄ • y H₂O, Fe(NO₃)₂, FeCl₂ • yH₂O, wobei y eine Zahl von 0-12 ist, in den Zeolithen eingebracht (Dotierung). Bei der Synthese ist zu beachten, dass bei der Festkörperionenaustauschreaktion zunächst eine innige Vermengung auf mechanischem Wege der (NH⁺₄)- und/oder der H⁺-Form des Zeolithen mit einem Eisensalz durch intensives mechanisches Mischen, z.B. in einer Kugelmühle bei Raumtemperatur, erforderlich ist. Danach wird diese Mischung typischerweise in einem Ofen an Luft oder unter Stickstoff bzw. einer reduzierenden Atmosphäre kalziniert, gegebenenfalls anschließend gewaschen und nach dem Abfiltrieren getrocknet.

Der Zeolith im Katalysator hat vorwiegend die Aufgabe, die Kohlenwasserstoffe des Abgases bei niedrigen Abgastemperaturen vorübergehend zu speichern, um sie bei den Betriebszuständen des Dieselmotors mit höheren Abgastemperaturen wieder abzugeben. Bei diesen höheren Abgastemperaturen können die desorbierten Kohlenwasserstoffe von den katalytisch aktivierten zusätzlichen Metalloxiden teilweise zu Kohlenmonoxid und Wasser oxidiert werden. Die nicht oxidierten Anteile der Kohlenwasserstoffe dienen neben Kohlenmonoxid als Reduktionsmittel für die katalytische Reduktion der im Abgas enthaltenen Stickoxide.

Die mit Eisen dotierte Zeolithe zeigen bei NH₃-Desorptionsexperimenten eine erhöhte Desorptionstemperatur für Kohlenwasserstoffe. Dadurch wird eine Kohlenwasserstoff-Speicherung über einen breiteren Temperaturbereich ermöglicht, was insbesondere eine Verbesserung der Kaltstarteigenschaften bei der Verwendung in Dieseloxidationskatalysatoren ermöglicht.

Bevorzugtes Edelmetall, das auf dem Metalloxid abgeschieden wird, ist Platin. Im Sinne dieser Erfindung sollen sich jedoch gerade die Stickoxide an der Oxidation der Rußpartikel im Partikelfilter beteiligen, so dass eine vorherige Reduktion der Stickoxide diesen Vorteil der Erfindung eliminieren würde. Vorstellbar ist jedoch eine derartige Kombination als nachgeschaltetes System, beispielsweise einem SCR-System, wobei dann noch restliches im Abgasstrom vorhandenes NOx reduziert werden kann.

Das Edelmetall wird durch im Stand der Technik bekannte Verfahren auf den Metalloxidträger aufgebracht. Dazu zählen beispielsweise die Imprägnierung in einem Tauchbad (washcoat), die Sprühimprägnierung oder eine Imprägnierung mittels Schaumstoffwalzen wie es in der DE 102005035945 A1 beschrieben ist.

Für die Imprägnierung liegt das Edelmetall gewöhnlich als Salzlösung vor, beispielsweise als Chlorid, Nitrat oder Sulfat. Es eignen sich gewöhnlich alle gebräuchlichen Salze und Komplexsalze der Edelmetalle, z.B. Hexachlorplatinsäure, Tetrachlorplatinsäure Diamindinitroplatinat (II), Tetraaminplatin(II)chlorid, Ammoniumtetrachloroplatinat(II), Ammoniumhexachloroplatinat(IV), Platinethylendiamindichlorid, Tetraaminplatin(II)nitrat, Tetraaminplatin(II)hydroxid, Methylethanolamin-Platin(II)hydroxid, Platinnitrat, Ethanolammoniumhexahydroxoplatinat (PtEA) und dergleichen.

Nach der Imprägnierung werden die mit Edelmetallsalz imprägnierten Metalloxidträger kalziniert, vorzugsweise bei Temperaturen von 200 bis 600 °C, wodurch sich fein verteiltes Edelmetall auf dem Metalloxidträger abscheidet. Bevorzugt ist die Partikelgröße des abgeschiedenen Edelmetalls im Bereich von 1 bis 20 nm, besonders bevorzugt im Bereich von 3 bis 17 nm, zu finden. Die Bestimmung der Teilchengröße kann durch eine Transmissions-Elektronen-Mikroskopie (TEM) bestimmt werden. Die Edelmetallkonzentration auf dem Metalloxidträger nach dem Kalzinieren beträgt etwa 1-10 Gew-%, vorzugsweise 2-5 Gew-% bezogen auf das Gesamtgewicht des imprägnierten Metalloxids. Wie in dem EP 1 129 764 B1 offenbart, kann auch eine Kalzinierung mittels Eindüsung in eine Flamme vorgenommen werden, wodurch sehr fein verteilte Pt-Teilchen mit einer mittleren Oxidationsstufe < 2,5 entstehen.

Die verwendeten Metalloxide sollten als Träger für das Edelmetall geeignet sein und eine BET-Oberfläche von 50-250 m²/g, vorzugsweise 100-200 m²/g, aufweisen. Die Bestimmung der BET-Oberfläche erfolgt nach DIN 66132 (nach der Methode von Brunauer, Emmett und Teller).

Erfindungsgemäss ist das Metalloxid ein Al/Si-Mischoxid, in jedem Fall aber ohne cerhaltige Oxide, da dies die Light-off-Temperatur für CO und HC erhöhen würde. Im Falle des Al/Si-Mischoxids soll das Molverhältnis von Al/Si etwa 95:5 bis 80:20 betragen.

Die aktivierten Metalloxide werden zusammen mit dem Fe-Zeolith verwendet und dazu auf einen geeigneten Träger aufgebracht. Dazu wird gewöhnlich ein sogenannter Washcoat (zumeist wässrige Suspensionen, d.h. eine die erfindungsgemäße Beschichtungszusammensetzung enthaltende Suspension, das imprägnierte Metalloxid und dem Fe-Zeolith hergestellt und nach im Stand der Technik bekannten Methoden auf den Träger aufgebracht. Als Träger eignen sich insbesondere monolithische Träger aus beispielsweise Metall oder Keramik.

Das optimale Gewichtsverhältnis der Metalloxide zur Zeolithmischung hängt von der mittleren Kohlenwasserstoffkonzentration im Abgas ab und ist damit auch von der Art des Dieselmotors abhängig. Oberhalb eines Gewichtsverhältnisses von 10:1 kann jedoch in keinem Fall mehr eine ausreichende Speicherung der Kohlenwasserstoffe gewährleistet werden. Wird dagegen das Gewichtsverhältnis Metalloxide/Zeolithmischung kleiner als 1:3, so ist die katalytische Aktivität des Katalysators nicht mehr ausreichend. Für direkt einspritzende und indirekt einspritzende Dieselmotoren haben sich Gewichtsverhältnisse von 6:1 bis 1:1, vorzugsweise 5:1 bis 2:1, bewährt.

Die Beschichtungszusammensetzung kann auch unter Zusatz weiterer geeigneter Hilfsstoffe wie anorganischen Bindern (z.B. Silicasol), Porenbildnern, Plastifiziermitteln und Befeuchtungsmitteln in bekannter Weise zu Formkörpern wie Tabletten und Extrudaten verarbeitet werden. Bevorzugt wird der Katalysator enthaltend die erfindungsgemäße Beschichtungszusammensetzung jedoch in Form einer Beschichtung (als Washcoat) auf den Innenwandungen der Strömungskanäle von metallischen oder keramischen Wabenkörpern (Monolithe) aufgebracht.

Für die Abgasreinigung von Dieselmotoren sind Beschichtungsmengen von 50 bis 500 g/l Volumen des Wabenkörpers vorteilhaft. Die Komponente der Beschichtungszusammensetzung (die nach Auftragen und Kalzinieren als eigentlicher Katalysator wirkt) wird dabei vorzugsweise so abgestimmt, dass die katalytisch aktiven Komponenten in den zusätzlichen Metalloxiden in einer Konzentration von etwa 0,01 bis 7 g/l Volumen des Wabenkörpers vorliegen.

Die notwendigen Beschichtungstechniken sind dem Fachmann bekannt. So wird zum Beispiel die Beschichtungszusammensetzung aus aktivierten Metalloxiden und der Zeolithmischung zu einer wässrigen Beschichtungsdispersion verarbeitet. Dieser Dispersion kann als Binder zum Beispiel Silicasol zugegeben werden. Die Viskosität der Dispersion kann durch geeignete Zusatzstoffe eingestellt werden, so dass es möglich wird, die benötigte Beschichtungsmenge in einem einzigen Arbeitsgang auf die Wandungen der Strömungskanäle aufzubringen. Ist dies nicht möglich, so kann die Beschichtung mehrfach wiederholt werden, wobei die frisch aufgebrachte Beschichtung jeweils durch eine Zwischentrocknung fixiert wird. Die fertige Beschichtung wird dann bei erhöhter Temperatur getrocknet und für die Dauer von 1 bis 4 Stunden bei Temperaturen zwischen 300 und 600 °C kalziniert.

Mit zum Umfang der Erfindung gehört auch ein Katalysator zur Abgasbehandlung von Dieselverbrennungsmotoren, der die erfindungsgemäße Beschichtungszusammensetzung enthält. Der Katalysator soll dabei bevorzugt die Funktion eines Dieseloxidationskatalysators und eines Dieselpartikelfilters umfassen. Durch die Kombination der beiden Funktionen in einem Bauteil kann zum einen Platz eingespart werden und zusätzlich können die Herstellungskosten reduziert werden.

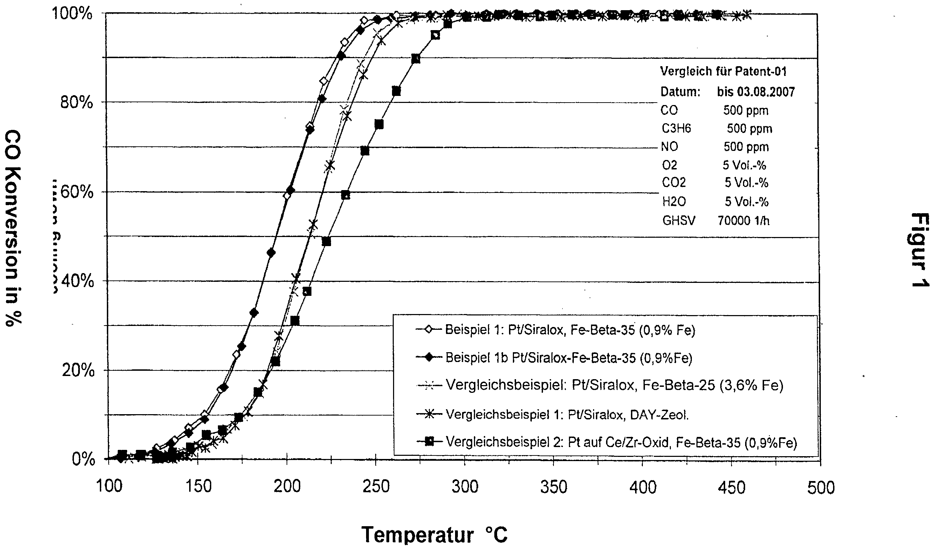

Die erfindungsgemäße Beschichtungszusammensetzung kann zur Abgasbehandlung, insbesondere zur Reinigung, von Abgasen von Dieselverbrennungsmotoren verwendet werden. Der Vorteil einer solchen erfindungsgemäßen Beschichtungszusammensetzung liegt in der verringerten CO- und HC-Light-off Temperatur, wie in Figur 1 im Vergleich der Umsetzungen unter Laborbedingungen mit 500 ppm CO, 500 ppm Propen und 500 ppm NO zu erkennen ist.

Ebenfalls zum Umfang der vorliegenden Erfindung gehört ein Verfahren zur Abgasbehandlung von Dieselverbrennungsmotoren, wobei die Abgasbehandlung die Oxidation von CO und HC, die Reduktion von NOx und die Elimination oder Verringerung von Partikelemissionen durch Oxidation in einem Dieseloxidationskatalysator oder einem kombinierten Dieseloxidationskatalysator und Dieselpartikelfilter umfasst. Dazu wird der von einem Dieselverbrennungsmotor erzeugte Abgasstrom über den Dieseloxidationskatalysator oder den kombinierten Dieseloxidationskatalysator und Dieselpartikelfilter, der die erfindungsgemäße Beschichtungszusammensetzung enthält, geleitet.

Die Erfindung soll nun anhand einiger nicht als einschränkend verstandener Beispiele und Figuren näher erläutert werden. Es zeigen:
- Fig. 1: die Umsätze von CO mit erfindungsgemäßen Katalysatoren und Vergleichskatalysatoren,
- Fig. 2: die Umsätze von Propen mit erfindungsgemäßen Katalysatoren und Vergleichskatalysatoren,
- Fig. 3: die Umsätze von NO mit erfindungsgemäßen Katalysatoren und Vergleichskatalysatoren,
- Fig. 4: die Ausbeute an NO₂ mit erfindungsgemäßen Katalysatoren und Vergleichskatalysatoren.

### Ausführungsbeispiele:

### 1. Herstellung der einsenhaltigen Zeolithe:

### Beispiel 1: Pt/Siralox mit Fe-Beta-Zeolith (0,9 % Fe)

### 1. Herstellung eines Eisen-ausgetauschten ("dotierten") β-Zeolithen:

Zuerst wurde durch "Flüssig-Ionen-Austausch" in einer Suspension aus einem NH₄-Beta-35-Zeolith (SiO₂/Al₂O₃ = 35, bezogen auf Si/Al) mit Eisensulfat ein Ionenausgetauschter Zeolith wie in der WO 03/022430 S. 21 beschrieben, hergestellt.

### 2. Herstellung des Oxidationskatalysators:

Zuerst wurde die Wasseraufnahme eine Al/Si-Mischoxids (Siralox 5/155 von Condea) bestimmt, indem das Pulver trocken gewogen wird. Anschließend wurden 357,4 g des trockenen Pulvers in einem Planetenmischer mit einer Lösung von Ethanolammoniumhexahydroxoplatinat (PtEA) imprägniert. Hierzu wurden 128,8 g einer PtEA-Lösung mit 13,87 % Pt (Hersteller Heraeus) soweit verdünnt, dass das Gesamtvolumen 90% der ermittelten möglichen Wasseraufnahme entspricht. Nach dieser Imprägnierung, welche durch Zutropfen der Pt-Lösung im Mischer erfolgt, wurde das Pulver 3 h bei 80 °C getrocknet und dann 3 h bei 550 °C kalziniert. Die Konzentration des Platin auf dem Pulver betrug am Ende 5 %.

Aus diesen zwei Pulvern wurde nun ein Washcoat hergestellt: 140 g des Pulvers 5% Pt/Siralox wurden in 560 g Wasser dispergiert. Die Suspension wurde in einem 300 ml Behälter mittels einer Perlenmühle (Dyno-Mill Fa. WA-Bachofen) mit Ce-stabilisierten ZrO₂-Kugeln (1,2 mm) 20 min bei 4000 U/min gemahlen. Zu 300 g dieser Suspension wurden nun 60 g des Fe-Zeolithen gegeben und wieder Wasser zugegeben, so dass die Feststoffkonzentration wieder 20 % betrug. Diese Suspension wurde noch 4 min mit einem "Ultra-Turrax-Rührer" bei 6000/min homogenisiert. Mit diesem Washcoat wurden 400 cpsi Cordierit-Monolithe mit 120 g Washcoat/l Wabe beschichtet.

Die Waben wurden bei 120 °C getrocknet und bei 550 °C kalziniert.

Für die Toluoladsorptionstests wurden 30 g dieses Washcoats in einer Schale getrocknet und bei 550 °C kalziniert. Ein Teil des entstehenden Pulvers wurde 16 h bei 700 °C und ein Teil bei 1000 °C im Ofen gealtert.

### Beispiel 1b

Ist identisch zu Beispiel 1a, nur mit dem Unterschied, dass der Mahlvorgang nicht im Durchlauf mit einer Perlenmühle durchgeführt wurde, sondern mit einer Planetenkugelmühle im Batch-Betrieb, wie im Vergleichsbeispiel 2.

Dabei wurden 140 g des Pulvers mit 5 % Pt auf Siralox mit 210 g Wasser in einem 500 ml Behälter in einer Retsch-Planeten-Kugelmühle mit Y-stabilisierten ZrO₂-Kugeln 5 h bei 250 U/min gemahlen. Diese Suspension wurde mit 350 g Wasser auf einen Feststoffgehalt von 20 % verdünnt. Dieser Mahlprozess ergab eine Suspension mit vergleichbaren d₅₀-Werten, aber etwas weniger Partikeln unter 0,5 µm als in Beispiel 1.

### Vergleichsbeispiel Pt/Siralox mit Fe-Beta-Zeolith (3,6 % Fe)

1. Herstellung eines Eisen-ausgetauschten β-Zeolithen:
   Zuerst wurde durch "Feststoff-Ionenaustausch" in einer Feststoffmischung aus H-Beta-25-Zeolith (SiO₂/Al₂O₃ = 25, bezogen auf Si/Al) mit Eisenchlorid ein Ionenausgetauschter Zeolith mit 3,6 % Eisengehalt hergestellt, analog, wie beschrieben in M. Kögel et.al. J. Catal. 182, (1999), 470-478 (in dieser Literaturstelle wird ein MFI-Zeolith und kein H-Beta-25-Zeolith verwendet).
2. Herstellung des Oxidationskatalysators:
   Es wurde wieder das 5 %/Pt auf Siralox-Pulver aus Beispiel 1 verwendet. Aus diesen zwei Pulvern wurde nun ein Washcoat hergestellt: 140 g des Pulvers mit 5 % Pt/Siralox wurden in 560 g Wasser dispergiert. Die Suspension wurde in einem 300 ml Behälter einer Perlenmühle (Dyno-Mill Fa. WA-Bachofen) mit Ce-stabilisierten ZrO₂-Kugeln (1,2 mm) 20 min bei 4000 U/min gemahlen. Zu 300 g dieser Suspension wurden nun 60 g des Fe-Zeolithen gegeben und wieder Wasser zugegeben, so dass die Feststoffkonzentration wieder 20 % betrug. Diese Suspension wurde noch 4 min mit einem "Ultra-Turrax-Rührer" bei 6000 /min homogenisiert. Mit diesem Washcoat wurden 400 cpsi Cordierit-Monolithe mit 120 g Washcoat/l Wabe beschichtet. Die Waben wurden bei 120 °C getrocknet und bei 550 °C kalziniert.

### Vergleichsbeispiel 1: Pt/Siralox mit dealuminiertem Y-Zeolith

Herstellung des Oxidationskatalysators:
Es wurde wieder das 5 %/Pt auf Siralox-Pulver aus Beispiel 1 verwendet.

Als Zeolith wurde ein handelsüblicher dealuminierter Y-Zeolith verwendet (CBV-500 von Zeolyst) (nicht Ionenausgetauscht, also ein H-Zeolith wie im EP 800856 B1).

Aus diesen zwei Pulvern wurde nun ein Washcoat hergestellt:

140 g des Pulvers mit 5 % Pt/Siralox wurden in 560 g Wasser dispergiert. Die Suspension wurde in einem 300 ml Behälter einer Perlenmühle (Dyno-Mill Fa. WA-Bachofen) mit Ce-stabilisierten ZrO₂-Kugeln (1,2 mm) bei 4000 U/min gemahlen. Zu 300 g dieser Suspension wurden nun 60 g des DA-Y-Zeolithen gegeben und wieder Wasser zugegeben, so dass die Feststoffkonzentration wieder 20 % betrug. Diese Suspension wurde noch 4 min mit einem "Ultra-Turrax-Rührer" bei 6000 /min homogenisiert.

Mit diesem Washcoat wurden 400 cpsi Cordierit-Monolithe mit 120 g Washcoat / L Wabe beschichtet. Die Waben wurden bei 120 °C getrocknet und bei 550 °C kalziniert.

Für die Toluoladsorptionstests wurden 30 g dieses Washcoats in einer Schale getrocknet und bei 550 °C kalziniert. Ein Teil des entstehenden Pulvers wurde 16 h bei 700 °C und ein anderer Teil bei 1000 °C im Ofen gealtert.

### Vergleichsbeispiel 2: Pt auf Ce/Zr-Oxid mit Fe-beta-Zeolith (0,9% Fe)

1. Herstellung eines Eisen-ausgetauschten β-Zeolithen:
   Es wurde der gleiche Fe-Beta-Zeolith wie in Beispiel 1 verwendet.
2. Herstellung des Oxidationskatalysators:
   Zuerst wurde die Wasseraufnahme eine Ce/Zr-Mischoxides (Ce/Zr = 75/25 von Fa. AMR Nr. 21289) bestimmt, indem das Pulver trocken gewogen, dann in Wasser aufgeschlämmt und abfiltriert und der feuchte Filterkuchen gewogen wurde.

Anschließend wurden 200 g des trockenen Pulvers in einem Planetenmischer mit einer Lösung von Ethanolammoniumhexahydroxoplatinat (PtEA) imprägniert. Hierzu wurden 72,1 g einer PtEA-Lösung mit 13,87 % Pt soweit verdünnt, dass das Gesamtvolumen 70 % der ermittelten möglichen Wasseraufnahme entsprach. Nach dieser Imprägnierung durch Zutropfen der Pt-Lösung im Mischer, wurde das Pulver kurz bei 120 °C in einen Trockenschrank gestellt und dann 3 h bei 80 °C im Ofen getrocknet und dann bei 550 °C kalziniert.

Die Konzentration des Platin auf dem Ce/Zr-Pulver betrug am Ende 5 Gew.-% bezogen auf das Gesamtgewicht Pt/Ce/Zr Pulver.

Aus diesen zwei Pulvern wurde nun ein Washcoat hergestellt:
140 g des Pulvers mit 5 % Pt auf Ce/Zr-Oxid wurden mit 210 g Wasser in einem 500 ml Behälter einer Retsch-Planeten-Kugelmühle mittels Y-stabilisierten ZrO₂-Kugeln 5 h bei 250 U/min gemahlen. Diese Suspension wurde mit 350 g Wasser auf einen Feststoffgehalt von 20 % verdünnt. Zu 300 g dieser Suspension wurden nun 60 g des Fe-Zeolithen gegeben und wieder Wasser zugegeben, so dass die Feststoffkonzentration wieder 20 % betrug. Diese Suspension wurde noch 4 min mit einem "Ultra-Turrax-Rührer" bei 6000 /min homogenisiert.

Mit diesem Washcoat wurden 400 cpsi Cordierit-Monolithe mit 120 g Washcoat/l Wabe beschichtet. Die Waben wurden bei 120 °C getrocknet und bei 550 °C kalziniert.

### Beispiel 3: Aktivitäten der Gasreaktion

Die Oxidationsaktivität der Katalysatoren wurde mit einem Modellabgas in einem Rohrreaktor getestet. Die Gaszusammensetzung ist in Tabelle 1 angegeben:

**Tabelle 1: Gaszusammensetzung des Aktivitätstests**

| Gas | Anteil |
|---|---|
| CO | 500 ppm |
| Propen | 500 ppm |
| NO | 500 ppm |
| O₂ | 5 % |
| CO₂ | 5 % |
| H₂O | 5 % |
| N₂ | Rest |

Es wurden kleine Keramikwaben mit 5 cm Länge und 2,5 mm Durchmesser mit einer Raumgeschwindigkeit von 70.000 h⁻¹ bei einer Heizrate von 10 °C/min getestet.

Dabei war zu beachten, dass die sehr hohe Propenkonzentration den CO-Umsatz allgemein verschlechtert, so dass die CO-Light-off-Temperaturen wesentlich höher waren, als unter realen Dieselabgasbedingungen, da reales Dieselabgas in der Regel weniger Olefine enthält, gewöhnlich weniger als 500 ppm.

Die Figuren 1 bis 4 zeigen die Umsätze von CO, Propen und NO sowie die Ausbeute an NO₂ bei der Verwendung erfindungsgemäßer Katalysatoren bzw. von Vergleichskatalysatoren. Die jeweilige Gasmischung wurde in Intervallen von 10 K/min auf 470 °C aufgeheizt und anschließend in Intervallen von 10 K/min abgekühlt. Nach jedem Intervall wurde der Umsatz (Konversion) und die Ausbeute mittels eines Standard FT-IR Gerätes gemessen.

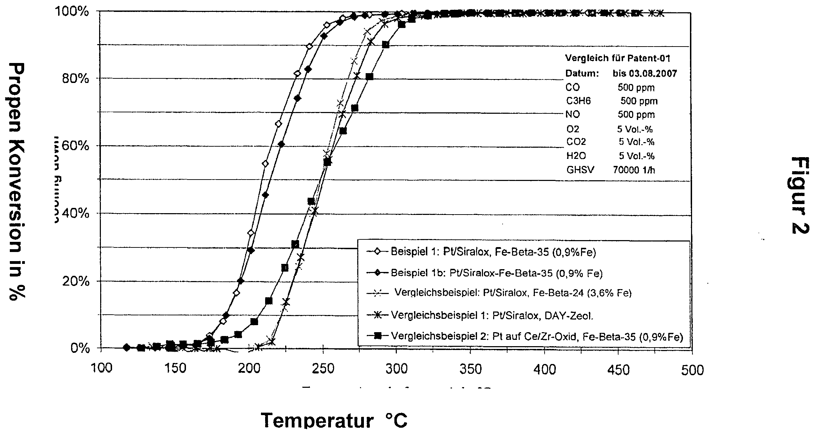

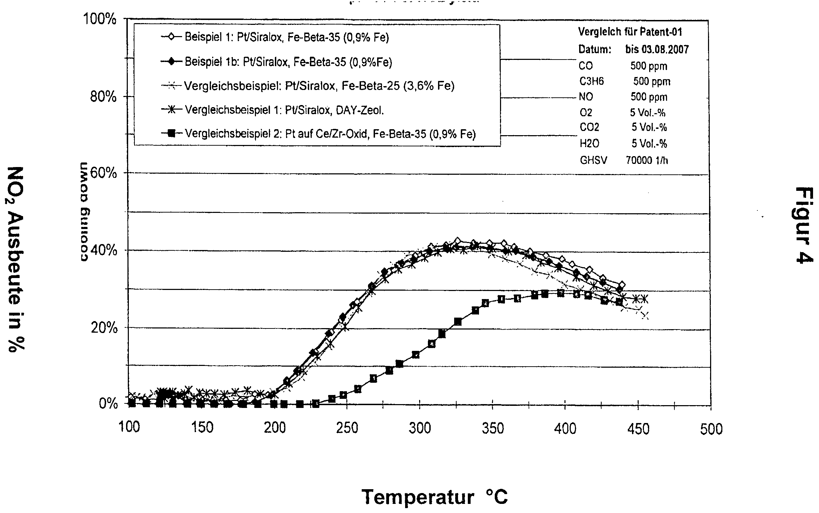

In Figur 3 und 4 ist deutlich zu erkennen, dass der Katalysator mit Pt auf dem Ceroxid und einem Eisen-beta-Zeolith insbesondere bezüglich der NO-Oxidation deutlich schlechter ist. Auch für die CO-Oxidation (Figur 1) ist dieser Katalysator etwas schlechter. Die spezielle Kombination, die in dem EP 6911883 B1 offenbart ist also der erfindungsgemäßen Kombination aus Platin auf Aluminium/Silicium-Oxid mit dem Eisen-Beta-Zeolithen deutlich unterlegen. Es ist weiterhin zu erkennen, dass für die CO- und Propen-Oxidation (Figur 1 und 2) der Katalysator etwas schlechter ist, wenn ein Fe-Beta-Zeolith gemaess dem Vergleichsbeispiel mit höherem Eisengehalt verwendet wird. Wahrscheinlich, weil eine Verstopfung der Poren hier eine Rolle spielen kann.

Ganz besonders bevorzugt werden also mit Eisen dotierte Zeolithe mit 0,6 - 2,0 Gew.-% Eisengehalt eingesetzt.

### Beispiel 4: Bestimmung der Kohlenwasserstoff-Speicherungseigenschaften

Zur relativen Bestimmung der Kohlenwasserstoffspeichereigenschaften wurden von frischen und gealterten Proben der Katalysatoren gepulste Toluoladsorptionsbestimmungen durchgeführt. Hierzu wurden Proben des Washcoats aus den Beispielen in einem TPR/TPD-Gerät (Micromeritics Autochem II) mit Massenspektrometer mit Pulsen aus Toluoldampf in Helium beaufschlagt. Die Analytik der durch die Probe gehenden Toluolmenge erfolgte durch Auswertung der Massenzahl 91 im MS. Es wurden zuerst 20 Pulse aus einer Schleife mit 4,69 ml Toluol-He-Dampf aufgegeben. Dabei wurde über das Integral die bei jedem Puls nach der Probe noch herausgehende Toluolmenge gemessen. Dabei wurde überprüft, ob bei den letzten Pulsen der 20 Pulse die Menge Toluol konstant bleibt und der Peakfläche im Bypass entspricht, also kein Toluol mehr adsorbiert wurde.

Für diese Adsorption wurde Helium durch einen kleinen Behälter mit Toluol temperiert auf 40 °C geleitet. Dabei hat Toluol einen Dampfdruck von 70 mbar. Die Schleife hatte eine Temperatur von 50 °C. Da dieses Gas durch die Schleife gespült wird, ist der Gesamtdruck bei Raumdruck (1013 mbar). Daraus ergab sich, dass pro Puls 12,2 µmol Toluol zugegeben wurde. Dies wurde für die Fläche eines Pulses als Standard betrachtet.

Danach wurde in einer temperaturprogrammierten Desorption (von 40-500 °C, 10 °C/min) das Toluol desorbiert und die gesamt Peakfläche ausgewertet. Daraus ergab sich die gesamte gespeicherte Menge an Toluol in der Probe.

In Tabelle 2 sind für Beispiel 1 mit Fe-Beta-35 (0,9 % Fe) und DAY-Zeolith die Toluoldesorption nach Sättigung für verschiedene Alterungstemperaturen angegeben.

**Tabelle 2: Toluoldesorption der Proben mit DAY- und Fe-Beta-Zeolith nach verschiedenen Alterungstemperaturen**

| **Probe** | | **Einwaage** | **Desorption** | **Desorption** |
|---|---|---|---|---|
| | | **(g)** | **µmol** | **µmol/g** |
| Beispiel 1: Fe-Beta-35 frisch | (0, 9% Fe) | 0,1057 | 27,30 | 258,25 |
| Beispiel 1: Fe-Beta-35 700°C | (0,9% Fe) | 0,1009 | 23,94 | 237,29 |
| Beispiel 1: Fe-Beta-35 1000°C | (0,9% Fe) | 0,0986 | 0,48 | 4,88 |
| Vergleichsbeispiel 1: DAY-Zeol. frisch | | 0,0998 | 27,22 | 272,76 |
| Vergleichsbeispiel 1: DAY-Zeol. 700°C | | 0,1035 | 23,41 | 226,17 |
| Vergleichsbeispiel 1: DAY-Zeol. 1000°C | | 0,1017 | 0,26 | 2,56 |

Es ist deutlich zu sehen, dass bei 1000 °C die Strukturen beider Zeolithe deutlich zusammenbrechen, aber dennoch bleibt bei dem Fe-Beta-Zeolith etwas mehr Speicherkapazität übrig. Es ist zu erkennen, dass der DAY-Zeolith im frischen Zustand etwas besser ist (272,76) als der Fe-Beta-Zeolith (258,25), aber schon nach Alterung bei 700 °C ist der Fe-Beta-Zeolith besser, was eine höhere Thermostabilität des Eisen-Beta-Zeolithen gegenüber dem Y-Zeolithen beweist. Diese Eigenschaft ist speziell wichtig für Dieseloxidationskatalysatoren, denen ein DPF nachgeschaltet ist, oder bei einer Kombination aus DOC und DPF, weil hier der DOC-Katalysator wesentlich höhere Temperaturen aushalten muss.

### Zusammenfassung der Ergebnisse:

Daraus ergibt sich, dass die Kombination aus Pt auf einem nicht Cer-haltigen Träger, wie Aluminiumoxid oder Al/Si-Mischoxid oder Zirkonoxid und einem Fe-Beta-Zeolith gerade für die neuen Anforderungen an DOC-Katalysatoren sehr große Vorteile bietet.

Die hier aufgeführten Beispiele zeigen, dass ein solcher Katalysator deutlich niedrigere Light-Off-Temperaturen für CO hat als Katalysatoren mit Pt auf Ce-Mischoxiden. Sie zeigen auch eine deutlich bessere Oxidation von NO zu NO₂, die nun auch notwendig ist, wegen der Oxidation von Ruß in nachgeschalteten Rußfiltern.

Es ist auch zu erkennen, dass die bevorzugte Verwendung eines Fe-Beta-Zeolithen mit nicht zu hohem Fe-Gehalt (0,6 - 2,0 %) besonders bevorzugt ist, da hier sogar noch die CO-Oxidation etwas besser ist, als bei Verwendung des DAY-Zeolithen und eines nicht erfindungsgemaessen Fe-Beta-Zeolithen mit 3,6 % Eisen. Es ist zu vermuten, dass die Porenstruktur und Größe dann sehr günstig für die Diffusion des kleinen Moleküls CO in der Katalysatorschicht ist. Ein Zeolith mit größerer Eisenmenge besitzt nicht mehr alles Eisen im Zeolithen, was auch an der rotbraunen Farbe zu erkennen ist. Sich absonderndes Eisenoxid an der Oberfläche verstopft scheinbar Poren. Die Verwendung eines Eisen-Beta-Zeolithen mit 0,9 % Eisen ist also besonders vorteilhaft.

Die Kombination aus Platin auf einem Aluminiumoxid oder Al/Si-Mischoxid mit einem H⁺, oder Na⁺-Zeolithen ist im EP 800856 B1 beschrieben. Ein Eisen-ausgetauschter Zeolith ist hier nicht enthalten. Die Ergebnisse zeigen, dass der DAY-Zeolith frisch tatsächlich eine etwas höhere Kohlenwasserstoffspeicherfähigkeit hat, als der Eisen-Beta-Zeolith. Da aber für die DOC mit nachgeschaltetem DPF die Temperaturstabilität wichtiger ist, zeigen die Ergebnisse hier, dass hier der Eisen-Beta-Zeolith temperaturstabiler ist, als der DAY-Zeolith. Daher hat auch die Kombination aus Pt auf Al/Si-Mischoxid oder Pt auf Aluminiumoxid mit dem Eisen-beta-Zeolithen hier einen Vorteil.

## Patentansprüche

1. Cerhaltige-Oxide-freie Beschichtungszusammensetzung für Dieseloxidationskatalysatoren, wobei die Beschichtungszusammensetzung eine Kombination aus einem Edelmetall auf einem Metalloxid und einen mit Eisen dotierten Beta-Zeolith (Fe-beta-Zeolith) umfasst und der Beta-Zeolith einen Eisengehalt von 0,6-2,0 Gew.-%, bezogen auf das Gesamtgewicht des Zeolithen, aufweist, wobei das Edelmetall Platin und das Metalloxid ein Al/Si-Mischoxid ist.

2. Beschichtungszusammensetzung nach Anspruch 1, **dadurch gekennzeichnet, dass** der Beta-Zeolith ein Si/Al-Verhältnis von mindestens 5:1 bis maximal 300:1 aufweist.

3. Beschichtungszusammensetzung nach einem der vorhergehenden Ansprüche, **dadurch gekennzeichnet, dass** das Gewichtsverhältnis Metalloxid/Fe-beta Zeolith 10:1 bis 1:1 beträgt.

4. Verwendung der Beschichtungszusammensetzung nach einem der Ansprüche 1 bis 3 in einem Dieseloxidationskatalysator, der in einem Bauteil mit einem Dieselpartikelfilter kombiniert ist.

5. Verfahren zur Abgasbehandlung von Dieselverbrennungsmotoren, wobei die Abgasbehandlung die Oxidation von CO und HC, die Reduktion von NOₓ und die Elimination oder Verringerung von Partikelemissionen durch Oxidation in einem Dieseloxidationskatalysator, der in einem Bauteil mit einem Dieselpartikelfilter kombiniert ist, umfasst, **dadurch gekennzeichnet, dass** ein Abgasstrom über den Dieseloxidationskatalysator, der die Beschichtungszusammensetzung nach einem der Ansprüche 1 bis 3 enthält und der in einem Bauteil mit einem Dieselpartikelfilter kombiniert ist, geleitet wird.

## Claims

1. Coating composition for diesel oxidation catalysts free of cerium containing oxides, wherein the coating composition comprises a combination of a noble metal on a metal oxide and a beta zeolite doped with iron (Fe beta zeolite) and the zeolite has an iron content of 0.6 - 2.0 wt.-%, relative to the overall weight of the zeolite, wherein the noble metal is platinum and the metal oxide is a mixed Al/Si-oxide.

2. Coating composition according to claim 1, **characterized in that** the beta zeolite has a Si/Al ration of at least 5:1 to at most 300:1.

3. Coating composition according to any of the preceding claims, **characterized in that** the weight ratio metal oxide/Fe beta zeolite is 10:1 to 1:1.

4. Use of a coating composition according to any of claims 1 to 3 in a combined diesel oxidation catalyst and diesel particle filter.

5. Method for treating the exhaust gas of diesel internal combustion engines, wherein the exhaust-gas treatment comprises the oxidation of CO and HC, the reduction of NOₓ and the elimination or reduction of particle emissions by oxidation in a combined diesel oxidation catalyst and diesel particle filter, **characterized in that** an exhaust-gas stream is passed over a combined diesel oxidation catalyst and diesel particle filter which contains the coating composition according to one of claims 1 to 3.

## Revendications

1. Composition de revêtement pour un catalyseur diesel à oxydation exempte d'oxydes comprenant cérium, dans laquelle la composition de revêtement comprend une combinaison d'un métal noble sur un oxyde de métal et un beta zéolite dopé avec fer (Fe beta zéolite) et le zéolite a un contenu de fer de 0.6% - 2.0% en poids, relatif au poids du zéolite, dans laquelle le métal noble est platine et l'oxyde de métal est un oxyde composite de Al/Si.

2. Composition de revêtement selon la revendication 1, **caractérisée en ce que** le beta zéolite a un rapport de Si/Al d'au moins 5 :1 à 300 :1 au maximum.

3. Composition de revêtement selon l'une de revendications précédentes, **caractérisée en ce que** le rapport en poids entre l'oxyde de métal/Fe beta zéolite est 10 :1 à 1 :1.

4. Utilisation d'une composition de revêtement selon l'une des revendications 1 à 3 pour un catalyseur diesel à oxydation combiné avec un filtre à particules diesel.

5. Procédé pour le traitement de gaz d'échappement d'un moteur diesel à combustion interne, dans lequel le traitement de gaz d'échappement comprend l'oxydation de CO et HC, la réduction de NOₓ et l'élimination ou réduction d'émissions de particules par oxydation dans un catalyseur diesel à oxydation combiné avec un filtre à particules diesel, **caractérisé en ce qu'**un courant de gaz d'échappement est passé sur le catalyseur diesel à oxydation combiné avec un filtre à particules diesel qui contient la composition de revêtement selon l'une des revendications 1 à 3.
